# EUROPÄISCHE PATENTANMELDUNG

(11) **EP 1 826 378 A2**
(43) Veröffentlichungstag der Anmeldung: **29.08.2007**
(21) Anmeldenummer: 07100614.2
(22) Anmeldetag: 16.01.2007
(51) Int. Cl.: F02D 35/02

(54) **Verfahren zum Betreiben einer Brennkraftmaschine, insbesondere eines Kraftfahrzeugs**

(30) Priorität: 28.02.2006 DE 102006009067
(71) Anmelder: ROBERT BOSCH GMBH, 70442 Stuttgart (DE)
(72) Erfinder: Damitz, Jens, 75428, Illingen (DE); Kessler, Michael, 71287, Weissach (DE); Tiebel, Wolfgang, 70192, Stuttgart (DE)

(57) **Zusammenfassung**

Es wird ein Verfahren zum Betreiben einer Brennkraftmaschine insbesondere eines Kraftfahrzeugs beschrieben. Die Brennkraftmaschine (10) weist einen Brennraum und ein Einspritzventil auf, mit dem Kraftstoff direkt oder über ein Saugrohr dem Brennraum zuführbar ist. Bei dem Verfahren wird ein maximaler Brennraumdruck (Pmax) und ein Signal (AB_MI) für einen Einspritzbeginn von Kraftstoff ermittelt (15) und das Signal (AB_MI) für den Einspritzbeginn wird in Abhängigkeit von dem maximalen Brennraumdruck (Pmax) beeinflusst (16). Es wird ein Signal (AD_MI) für eine Einspritzdauer von Kraftstoff ermittelt (15) und in Abhängigkeit von dem maximalen Brennraumdruck (Pmax) beeinflusst (18).

## Beschreibung

### Stand der Technik

Die Erfindung betrifft ein Verfahren zum Betreiben einer Brennkraftmaschine insbesondere eines Kraftfahrzeugs. Die Erfindung betrifft auch ein entsprechendes Computerprogramm sowie ein entsprechendes Speichermedium. Weiterhin betrifft die Erfindung ein Steuergerät für eine Brennkraftmaschine insbesondere eines Kraftfahrzeugs. Die Erfindung ist dabei bei Benzin- und Diesel-Brennkraftmaschinen einsetzbar, wie auch bei Brennkraftmaschinen mit Direkt- und Saugrohreinspritzungen.

Aus der DE 197 05 463 A1 ist ein Verfahren zum Betreiben einer Brennkraftmaschine bekannt, bei dem Kraftstoff mittels eines Einspritzventils einem Brennraum zugeführt wird. Bei dem Verfahren wird der Druck in einem Brennraum der Brennkraftmaschine gemessen. Eine Korrekturwertermittlung überprüft, ob der Maximalwert des Brennraumdrucks größer ist als ein vorgegebener Schwellwert. Ist dies der Fall, so wird ein von einer Sollwertvorgabe ermittelter Sollwert für den Spritzbeginn der Kraftstoffeinspritzung entsprechend korrigiert, und zwar vorzugsweise in Richtung einer Spätverstellung des Spritzbeginns. Damit soll erreicht werden, dass der Maximalwert des Brennraumdrucks wieder kleiner wird als der Schwellwert.

Insbesondere Diesel-Brennkraftmaschinen werden häufig derart ausgelegt, dass bei hohen Motordrehzahlen nicht nur der maximal zulässige Brennraumdruck erreicht wird, sondern auch die maximal zulässige Temperatur im Auslassbereich der Brennkraftmaschine. Wird nun zum Zwecke der Begrenzung des maximalen Brennraumdrucks der Spritzbeginn nach spät verstellt, so kann dies zu einer weiteren Erhöhung der Temperatur im Auslassbereich führen. Die maximal zulässige Temperatur im Auslassbereich kann dadurch überschritten werden. Dies kann einen Schaden im Auslassbereich der Brennkraftmaschine zur Folge haben, beispielsweise bei einem der Brennkraftmaschine nachgeordneten Abgasturbolader.

Aufgabe der Erfindung ist es, ein Verfahren zum Betreiben einer Brennkraftmaschine zu schaffen, bei dem eine Schädigung von Komponenten im Auslassbereich vermieden wird.

Die Erfindung löst diese Aufgabe durch ein Verfahren nach dem Anspruch 1. Die Aufgabe wird ebenfalls durch ein entsprechendes Computerprogramm, ein entsprechendes Speichermedium und ein entsprechendes Steuergerät gelöst.

Ausgehend von dem beschriebenen Stand der Technik wird von der Erfindung ein Signal für eine Einspritzdauer von Kraftstoff ermittelt und in Abhängigkeit von dem maximalen Brennraumdruck beeinflusst. Durch diese Beeinflussung der Einspritzdauer ist es möglich, einer Erhöhung der Temperatur im Auslassbereich der Brennkraftmaschine entgegenzuwirken. Überschreitet also der maximale Brennraumdruck den vorgegebenen Schwellwert, und wird daraufhin der Spritzbeginn nach spät verstellt, um den Brennraumdruck zu begrenzen, so kann die dadurch möglicherweise entstehende Erhöhung der Temperatur im Auslassbereich der Brennkraftmaschine erfindungsgemäß dadurch kompensiert werden, dass die Einspritzdauer von Kraftstoff in Abhängigkeit von dem ermittelten maximalen Brennraumdruck bzw. von der Verschiebung des Spritzbeginns beeinflusst wird.

Auf diese Weise kann mit Hilfe der Erfindung ein Überschreiten der maximal zulässigen Temperatur im Auslassbereich der Brennkraftmaschine vermieden werden. Eine Schädigung von dortigen Komponenten, insbesondere eines nachgeordneten Abgasturboladers ist damit ausgeschlossen.

Bei einer vorteilhaften Ausgestaltung der Erfindung wird das Signal für die Einspritzdauer in Richtung zu einer Verkürzung der Einspritzdauer beeinflusst. Durch die Verminderung der einzuspritzenden Kraftstoffmasse wird erreicht, dass die Temperatur des erzeugten Abgases vermindert oder zumindest nicht erhöht wird. Die Temperatur im Auslassbereich der Brennkraftmaschine kann damit auf die maximal zulässige Temperatur begrenzt werden.

Bei einer anderen vorteilhaften Ausgestaltung der Erfindung wird die Beeinflussung des Signals für die Einspritzdauer geregelt. Damit kann ein Sollwert für die maximal zulässige Temperatur im Auslassbereich der Brennkraftmaschine vorgegeben und bei dem erfindungsgemäßen Verfahren berücksichtigt werden.

Bei vorteilhaften Weiterbildungen der Erfindung beziehen sich das Signal für den Einspritzbeginn und das Signal für die Einspritzdauer entweder auf eine Haupteinspritzung oder auf eine oder mehrere Voreinspritzung/en. Wird somit der Kraftstoff mittels einer oder mehrerer Voreinspritzung/en und einer Haupteinspritzung über das Einspritzventil dem Brennraum der Brennkraftmaschine zugeführt, so kann das erfindungsgemäße Verfahren auf die Voreinspritzung/en, wie auch auf die Haupteinspritzung angewendet werden.

Bei einer weiteren vorteilhaften Ausgestaltung der Erfindung, die auch eine eigenständige Erfindung darstellen kann, wird ein maximaler Brennraumdruck ermittelt und mit einem Sollwert für den maximalen Brennraumdruck verglichen, und es wird eine Überwachung aktiviert, wenn der maximale Brennraumdruck größer als der Sollwert für den maximalen Brennraumdruck wird. Mit Hilfe der Überwachung kann eine mögliche Überhitzung des Auslassbereichs und damit eine Zerstörung der Brennkraftmaschine verhindert werden, vorzugsweise durch einen Notlaufbetrieb der Brennkraftmaschine oder eine Information an einen Betreiber der Brennkraftmaschine.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

### Offenbarung der Erfindung

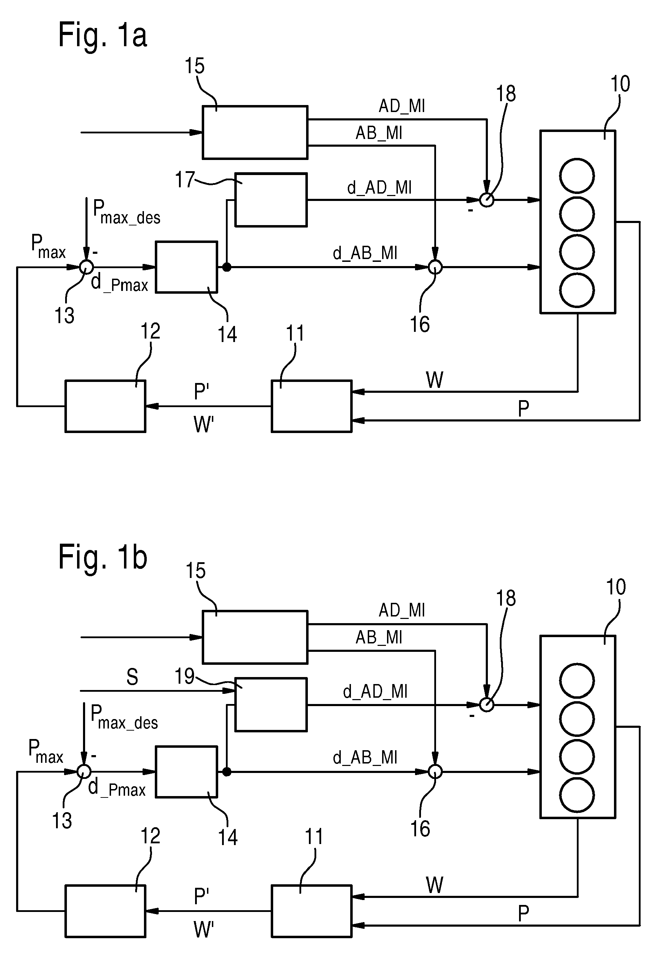

Die Figuren 1a, 1b, 2 und 3 zeigen schematische Blockschaltbilder von vier Ausführungsbeispielen eines erfindungsgemäßen Verfahrens zum Betreiben einer Brennkraftmaschine.

In der Figur 1a ist ein erstes Ausführungsbeispiel eines Verfahrens zum Betreiben einer Brennkraftmaschine 10 dargestellt. Die Brennkraftmaschine 10 kann vorzugsweise zum Antrieb eines Kraftfahrzeugs vorgesehen sein. Die Brennkraftmaschine 10 kann eine Direkteinspritzung oder eine Saugrohreinspritzung aufweisen und für Benzin- oder Dieselkraftstoff vorgesehen sein.

Der Brennkraftmaschine 10 sind Sensoren zugeordnet, mit denen Betriebsgrößen der Brennkraftmaschine 10 gemessen werden können. In der Figur 1a werden beispielhaft der Brennraumdruck P in einem der Zylinder sowie der Drehwinkel W der Kurbelwelle der Brennkraftmaschine 10 gemessen. Es versteht sich, dass alternativ oder zusätzlich auch andere Betriebsgrößen der Brennkraftmaschine 10 gemessen werden können. Ebenfalls versteht es sich, dass die Messung einzelner Betriebsgrößen durch eine Modellierung oder auf sonstige Weise aus anderen Betriebsgrößen abgeleitet werden kann.

Der Brennraumdruck P und der Drehwinkel W sind einer optionalen Signalaufbereitung 11 zugeführt. Beispielsweise kann von der Signalaufbereitung 11 ein möglicher elektrischer oder thermischer Drift der gemessenen Signale korrigiert werden. Ebenfalls kann ein Offset der gemessenen Signale berücksichtigt werden oder es können die gemessenen Signale geglättet werden. In der Figur 1a werden von der Signalaufbereitung 11 ein korrigierter Brennraumdruck P' und eine korrigierter Drehwinkel W' weitergegeben.

In einer Maximalwertermittlung 12 wird aus dem korrigierten Brennraumdruck P' ein maximaler Brennraumdruck Pmax ermittelt. Hierzu kann ein Vergleichsverfahren oder ein sonstiges Interpolationsverfahren verwendet werden. Mit Hilfe des korrigierten Drehwinkels W' kann eine Plausibilitätsprüfung durchgeführt werden. So muss der ermittelte maximale Brennraumdruck Pmax bei einem Drehwinkel der Kurbelwelle von etwa 180 Grad auftreten.

Danach wird ein Vergleich 13 durchgeführt. Hierzu wird ein Sollwert Pmax_des für den maximalen Brennraumdruck von dem ermittelten maximalen Brennraumdruck Pmax subtrahiert. Die resultierende Druckdifferenz d_Pmax kann kleiner oder größer als Null sein. Weiterhin ist diese Druckdifferenz d_Pmax einem Regler 14 zugeführt, bei dem es sich vorzugsweise um einen PI-Regler handelt.

Ist der maximale Brennraumdruck Pmax kleiner als der Sollwert Pmax_des und ist damit die Druckdifferenz d_Pmax kleiner als Null, so wird der Regler 14 nicht aktiv. Ist der maximale Brennraumdruck Pmax jedoch größer als der Sollwert Pmax_des und ist damit die Druckdifferenz d_Pmax größer als Null, so wird der Regler 14 aktiviert. Es versteht sich, dass das Aktivierungskriterium des Reglers 14 mit einer Hysterese-Funktion kombiniert sein kann.

Wird der Regler 14 aktiviert, so ist der Regler 14 dazu vorgesehen, die Brennkraftmaschine 10 derart zu beeinflussen, dass der maximale Brennraumdruck Pmax wieder abnimmt und zumindest gleich oder möglichst kleiner wird als der Sollwert Pmax._des für den maximalen Brennraumdruck.

Gemäß der Figur 1a ist eine Motorsteuerung 15 vorhanden, die ganz allgemein zur Steuerung und/oder Regelung der Brennkraftmaschine 10 hergerichtet ist. Eingangsseitig ist die Motorsteuerung 15 von einer oder von mehreren Betriebsgrößen der Brennkraftmaschine 10 beaufschlagt. Dabei kann es sich um die bereits erläuterten Betriebsgrößen, wie auch um andere Betriebsgrößen handeln, die auf beliebige Weise erzeugt werden können. Die Betriebsgrößen sind dabei abhängig von dem momentanen Betriebszustand der Brennkraftmaschine 10 und damit von deren aktuellem Betriebspunkt.

Die Motorsteuerung 15 ist derart hergerichtet, dass sie aus den eingangsseitigen Betriebsgrößen Signale ableiten kann, die zur Ansteuerung und damit zum Betrieb der Brennkraftmaschine 10 verwendet werden können. So können von der Motorsteuerung 15 Signale zur Ansteuerung beispielsweise einer Drosselklappe oder zum Öffnen und Schließen eines Einspritzventils der Brennkraftmaschine 10 erzeugt werden.

Nachfolgend wird davon ausgegangen, dass der Kraftstoff während eines Arbeitszyklus der Brennkraftmaschine 10, also während einer Bewegung der Kurbelwelle um 720 Grad, in Form von mindestens einer Voreinspritzung und mindestens einer Haupteinspritzung mit Hilfe von Einspritzventilen in die Zylinder der Brennkraftmaschine 10 eingespritzt wird.

In der Figur 1a werden von der Motorsteuerung 15 beispielhaft zwei Signale erzeugt, die zur Ansteuerung eines Einspritzventils der Brennkraftmaschine 10 vorgesehen sind. Dies ist einerseits ein Signal AB_MI für den Einspritzbeginn der Haupteinspritzung und andererseits ein Signal AD_MI für die Einspritzdauer der Haupteinspritzung. Diese Signale werden, wie erläutert wurde, von der Motorsteuerung 15 in Abhängigkeit von Betriebsgrößen der Brennkraftmaschine 10 für den aktuellen Betriebspunkt der Brennkraftmaschine 10 ermittelt.

Wie ebenfalls erläutert wurde, ist der Regler 14 nicht aktiv, solange der maximale Brennraumdruck Pmax kleiner ist als der Sollwert Pmax_des. In diesem Fall ist kein Korrekturbedarf des maximalen Brennraumdrucks Pmax vorhanden. Die von der Motorsteuerung 15 ermittelten Signale AB_MI und AD_MI für den Einspritzbeginn und die Einspritzdauer der Haupteinspritzung werden deshalb unverändert weitergegeben und beaufschlagen damit unverändert das entsprechende Einspritzventil.

Ist der maximale Brennraumdruck Pmax jedoch größer als der Sollwert Pmax_des, so wird, der Regler 14 aktiviert. In diesem Fall erzeugt der Regler 14 ein Ausgangssignal d_AB_MI, das einen Korrekturwert für den Einspritzbeginn der Haupteinspritzung darstellt. Dieser Korrekturwert wird in einer nachfolgenden Addition 16 mit dem Signal AB_MI für den Einspritzbeginn der Haupteinspritzung verknüpft. Dies hat zur Folge, dass der Einspritzbeginn der Haupteinspritzung hin zu einem späteren Zeitpunkt verschoben wird. Mit Hilfe des Ausgangssignals d_AB_MI des Reglers 14 erfolgt also eine Spätverschiebung der Haupteinspritzung.

Diese Spätverstellung der Haupteinspritzung wird von dem Regler 14 so lange durchgeführt, bis der maximale Brennraumdruck Pmax wieder zumindest gleich oder kleiner als der Sollwert Pmax_des für den maximalen Brennraumdruck wird. Auf diese Weise wird somit vermieden, dass der Sollwert Pmax_des für den maximalen Brennraumdruck für eine längere Zeitdauer überschritten wird.

Sofern der Regler 14 aktiv ist, wird das Ausgangssignal d_AB_MI des Reglers 14 gleichzeitig an eine Steuerung 17 weitergegeben. Die Steuerung 17 ist dazu vorgesehen, ein Ausgangssignal d_AD_MI zu erzeugen, das einen Korrekturwert für die Einspritzdauer der Haupteinspritzung darstellt. Dieser Korrekturwert wird in einer nachfolgenden Subtraktion 18 mit dem Signal AD_MI für die Einspritzdauer der Haupteinspritzung verknüpft. Dies hat zur Folge, dass die Einspritzdauer der Haupteinspritzung verkürzt wird. Mit Hilfe des Ausgangssignals d_AD_MI der Steuerung 17 erfolgt also eine Verminderung der bei der Haupteinspritzung eingespritzten Kraftstoffmasse.

Die Steuerung 17 kann das Ausgangssignal d_AD_MI proportional zu dem Ausgangssignal d_AB_MI des Reglers 14 erzeugen. Dabei kann ein Gewichtungsfaktor vorgesehen sein. Alternativ kann in der Steuerung 17 ein Kennfeld hinterlegt sein, mit dem die Abhängigkeit des Ausgangssignals d_AD_MI von dem Ausgangssignal d_AB_MI auch nichtlinear und/oder zusätzlich in Abhängigkeit von sonstigen Betriebsgrößen der Brennkraftmaschine 10 realisiert sein kann.

Die verminderte Kraftstoffmasse der Haupteinspritzung hat zur Folge, dass die aufgrund der Verbrennung des Kraftstoffs entstehende Temperatur des Abgases ebenfalls vermindert oder zumindest nicht erhöht wird. Insbesondere im Auslassbereich der Zylinder der Brennkraftmaschine 10 und damit im Bereich eines dort angeordneten Abgasturboladers wird damit die auftretende Temperatur vermindert. Eine Messung der Temperatur im Auslassbereich der Brennkraftmaschine 10 ist dabei nicht erforderlich.

Die erläuterte, von dem Regler 14 hervorgerufene Spätverschiebung der Haupteinspritzung wird damit von der vorstehenden, von der Steuerung 17 hervorgerufenen Verminderung der während der Haupteinspritzung einzuspritzenden Kraftstoffmasse begleitet. Auf diese Weise wird einerseits die Verminderung bzw. Begrenzung des maximalen Brennraumdrucks in den Zylindern der Brennkraftmaschine 10 sowie andererseits die Verminderung bzw. Begrenzung der im Auslassbereich der Brennkraftmaschine 10 auftretenden Temperaturen erreicht.

Die erläuterte Beeinflussung des Einspritzbeginns und der Einspritzdauer der Haupteinspritzung kann für alle Zylinder der Brennkraftmaschine 10 gemeinsam ermittelt und ausgeführt werden. Ebenfalls kann die genannte Beeinflussung für jeden Zylinder separat realisiert sein.

Anstelle der erläuterten Beeinflussung der Einspritzdauer der Haupteinspritzung ist es auch möglich, auf einen Sollwert für das von der Brennkraftmaschine 10 abzugebende Motormoment einzuwirken und diesen vorzugsweise zu vermindern. In entsprechender Weise kann ein Ladedruck und/oder eine Ladelufttemperatur eines gegebenenfalls vorhandenen Abgasturboladers und/oder ein auf den Kraftstoff einwirkender, sogenannter Raildruck und/oder eine Frischluftrate der der Brennkraftmaschine 10 zugeführten Luft und/oder eine Rückführrate einer gegebenenfalls vorhandenen Abgasrückführung. Diese Möglichkeiten können alternativ oder in beliebigen Kombinationen realisiert sein.

Die erläuterten Funktionen, insbesondere der Regler 14, die Motorsteuerung 15 und die Steuerung 17, werden mit Hilfe eines elektronischen Steuergeräts realisiert. Dieses Steuergerät kann zumindest teilweise in analoger Schaltungstechnik aufgebaut sein. Vorzugsweise enthält das Steuergerät einen Computer und ein Speichermedium, wobei auf dem Speichermedium ein Computerprogramm abgespeichert ist, das auf dem Computer ablaufen kann, und das dann dazu geeignet ist, die erläuterten Funktionen auszuführen.

In der Figur 1b ist ein zweites Ausführungsbeispiel eines Verfahrens zum Betreiben einer Brennkraftmaschine 10 dargestellt. Die Figur 1b stimmt weitgehend mit der Figur 1a überein. Insoweit sind in der Figur 1b die Bezugszeichen aus der Figur 1a übernommen. Hinsichtlich dieser Übereinstimmungen wird auf die Erläuterungen zu der Figur 1a verwiesen.

Abweichend von der Figur 1a ist in dem Ausführungsbeispiel der Figur 1b keine Steuerung 17, sondern eine Regelung 19 vorgesehen. Wie in der Figur 1a ist dieser Regelung 19 das Ausgangssignal d_AB_MI des Reglers 14 zugeführt. Ebenfalls wie in der Figur 1a erzeugt die Regelung 19 das Ausgangssignal d_AD_MI. Im Unterschied zur Figur 1a ist der Regelung 19 jedoch zusätzlich ein Signal S als Eingangssignal zugefü hrt.

Insbesondere in Abhängigkeit von einem Vergleich dieses Signals S mit dem zugeführten Ausgangssignal D_AB_MI erzeugt die Regelung 19 das Ausgangssignal d_AD_Ml derart, dass dieses Ausgangssignal d_AD_MI den bereits erläuterten Korrekturwert für die Einspritzdauer der Haupteinspritzung darstellt. Dieser Korrekturwert wird in der nachfolgenden Subtraktion 18 mit dem Signal AD_MI für die Einspritzdauer der Haupteinspritzung verknüpft. Dies hat zur Folge, dass die Einspritzdauer der Haupteinspritzung verkürzt wird.

Mit Hilfe des Ausgangssignals D₋AD₋MI der Regelung 19 erfolgt also eine Verminderung der bei der Haupteinspritzung einzuspritzenden Kraftstoffmasse. Dies hat zur Folge, dass die aktuelle Temperatur im Auslassbereich der Brennkraftmaschine 10 vermindert oder zumindest nicht mehr erhöht wird.

Bei dem Signal S kann es sich um einen Sollwert handeln, der die maximale, im Auslassbereich der Brennkraftmaschine 10 zulässige Temperatur darstellt. Dieser Sollwert kann vorgegeben werden oder über ein Kennfeld gegebenenfalls in Abhängigkeit von Betriebsgrößen der Brennkraftmaschine 10 veränderlich sein. Die Temperatur im Auslassbereich der Brennkraftmaschine 10 wird in diesem Fall somit mit Hilfe der Regelung 19 auf den vorgenannten Sollwert begrenzt.

Alternativ kann es sich bei dem Signal S um eine von einem Sensor gemessene Temperatur handeln, wobei der Sensor vorzugsweise im Auslassbereich der Brennkraftmaschine 10 angeordnet ist. Bei einer Aktivierung des Reglers 14 wird dann die in diesem Zeitpunkt gemessene Temperatur gespeichert. Die Temperatur im Auslassbereich der Brennkraftmaschine 10 wird in diesem Fall somit mit Hilfe der Regelung 19 auf die vorgenannte, abgespeicherte Temperatur begrenzt.

Alternativ kann es sich bei dem Signal S um eine Temperatur handeln, die die Temperatur im Auslassbereich der Brennkraftmaschine 10 repräsentiert, und die mit Hilfe einer Modellierung aus Betriebsgrößen der Brennkraftmaschine 10 ermittelt wird. Bei einer Aktivierung des Reglers 14 wird die in diesem Zeitpunkt ermittelte Temperatur gespeichert. Die Temperatur im Auslassbereich der Brennkraftmaschine 10 wird in diesem Fall somit mit Hilfe der Regelung 19 auf die vorgenannte, modellierte Temperatur begrenzt.

Alternativ kann es sich bei dem Signal S um eine Größe handeln, die mit der Temperatur im Auslassbereich der Brennkraftmaschine 10 korreliert, und die beispielweise aus dem Verlauf des Brennraumdrucks P' über der Zeit abgeleitet wird. Bei einer Aktivierung des Reglers 14 wird die in diesem Zeitpunkt ermittelte Größe gespeichert. Die Temperatur im Auslassbereich der Brennkraftmaschine 10 wird in diesem Fall somit Mit Hilfe der Regelung 19 auf die vorgenannte, korrelierende Größe begrenzt.

Es versteht sich, dass das Signal S auch auf andere Weise ermittelt werden kann, und dass auch Kombinationen der vorstehenden Möglichkeiten verwendet werden können.

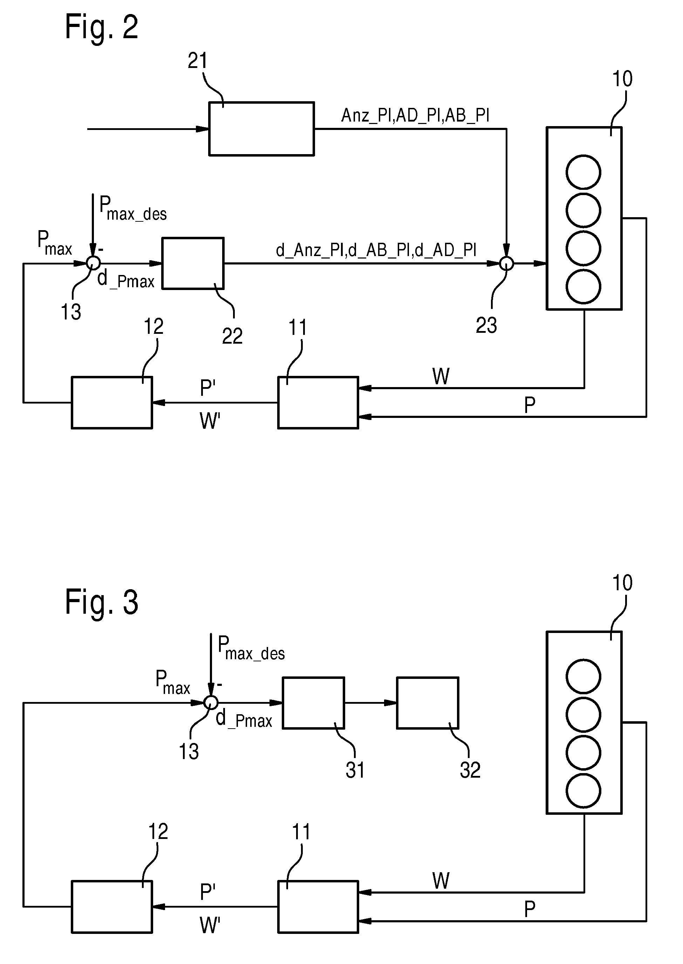

In der Figur 2 ist ein drittes Ausführungsbeispiel eines Verfahrens zum Betreiben einer Brennkraftmaschine 10 dargestellt. Die Figur 2 stimmt teilweise mit der Figur 1a überein. Insoweit sind in der Figur 2 die Bezugszeichen aus der Figur 1a übernommen. Hinsichtlich dieser Übereinstimmungen wird auf die Erläuterungen zu der Figur 1a verwiesen.

In der Figur 2 ist eine Motorsteuerung 21 vorgesehen, die der Motorsteuerung 15 der Figur 1a entspricht. Im Unterschied zur Figur 1a ist die Motorsteuerung 21 der Figur 2 jedoch dazu vorgesehen, die Voreinspritzung von Kraftstoff in die Zylinder der Brennkraftmaschine 10 zu beeinflussen. Zu diesem Zweck erzeugt die Motorsteuerung 21 ein Signal Anz_PI, das die Anzahl der Voreinspritzungen festlegt, ein Signal AB_PI für den Einspritzbeginn der Voreinspritzung/en und ein Signal AD_PI für die Einspritzdauer der Voreinspritzung/en. Diese Signale werden, wie im Zusammenhang mit der Figur 1a erläutert wurde, von der Motorsteuerung 21 in Abhängigkeit von Betriebsgrößen der Brennkraftmaschine 10 für den aktuellen Betriebspunkt der Brennkraftmaschine 10 ermittelt.

Weiterhin ist bei der Figur 2 ein Regler 22 vorgesehen, der dem Regler 14 der Figur 1a entspricht, und bei dem es sich insbesondere um einen PI-Regler handelt. Wie der Regler 14 der Figur 1a, so wird auch der Regler 22 der Figur 2 von der Druckdifferenz d_Pmax beaufschlagt. Im Unterschied zur Figur 1a ist der Regler 22 der Figur 2 jedoch dazu vorgesehen, die Voreinspritzung von Kraftstoff in die Zylinder der Brennkraftmaschine 10 zu beeinflussen. Zu diesem Zweck erzeugt der Regler 22 ein Signal d_Anz_PI, das die Anzahl der Voreinspritzungen betrifft, ein Signal d_AB_PI, das den Einspritzbeginn der Voreinspritzung/en betrifft, und ein Signal d_AD_Pl, das die Einspritzdauer der Voreinspritzung/en betrifft.

Wie im Zusammenhang mit der Figur 1a erläutert wurde, können die vorgenannten Signale auf alle Zylinder der Brennkraftmaschine 10 bezogen sein oder zylinderindividuell ermittelt werden.

Wie ebenfalls im Zusammenhang mit dem Regler 14 der Figur 1a erläutert wurde, so ist auch der Regler 22 nicht aktiv, solange der maximale Brennraumdruck Pmax kleiner ist als der Sollwert Pmax_des. In diesem Fall ist kein Korrekturbedarf des maximalen Brennraumdrucks Pmax vorhanden. Die von der Motorsteuerung 21 ermittelten Signale Anz_Pl, AB_Pl und AD_PI für die Anzahl der Voreinspritzungen, den Einspritzbeginn und die Einspritzdauer der Voreinspritzung/en werden deshalb unverändert weitergegeben und beaufschlagen damit unverändert das bzw. die entsprechende/n Einspritzventil/e.

Ist der maximale Brennraumdruck Pmax jedoch größer als der Sollwert Pmax_des, so wird, der Regler 22 aktiviert. Es versteht sich, dass das Aktivierungskriterium des Reglers 22 mit einer Hysterese-Funktion kombiniert sein kann. Wird der Regler 22 aktiviert, so erzeugt er die Signale d_Anz_PI, d_AB_PI und d_AD_PI. Diese Signale stellen Korrekturwerte für die Anzahl der Einspritzungen, den Einspritzbeginn und die Einspritzdauer der Voreinspritzung/en dar. Diese Korrekturwerte werden in einer nachfolgenden Addition 23 mit den jeweils zugehörigen Signalen Anz_Pl, AB_Pl und AD_PI verknüpft. Dies hat zur Folge, dass die Anzahl der Voreinspritzungen, der Einspritzbeginn und die Einspritzdauer der Voreinspritzung/en verändert wird. Dabei ist es möglich, dass nur eines der Signale oder eine Kombination der Signale verändert wird.

Diese Veränderung der Voreinspritzung/en wird von dem Regler 22 so lange durchgeführt, bis einerseits der maximale Brennraumdruck Pmax wieder zumindest gleich oder kleiner als der Sollwert Pmax_des für den maximalen Brennraumdruck wird, und bis andererseits die Temperatur im Auslassbereich der Brennkraftmaschine 10 ebenfalls kleiner oder zumindest nicht größer wird. Auf diese Weise wird somit vermieden, dass der Sollwert Pmax_des für den maximalen Brennraumdruck einerseits sowie eine maximal zulässige Temperatur im Auslassbereich andererseits für eine längere Zeitdauer überschritten wird.

In der Figur 3 ist ein viertes Ausführungsbeispiel eines Verfahrens zum Betreiben einer Brennkraftmaschine 10 dargestellt. Die Figur 3 stimmt teilweise mit der Figur 1a überein. Insoweit sind in der Figur 3 die Bezugszeichen aus der Figur 1a übernommen. Hinsichtlich dieser Übereinstimmungen wird auf die Erläuterungen zu der Figur 1a verwiesen.

In der Figur 3 ist eine Überwachung 31 vorgesehen, der die Druckdifferenz d_Pmax zugeführt ist. Ist der maximale Brennraumdruck Pmax kleiner als der Sollwert Pmax_des und ist damit die Druckdifferenz d_Pmax kleiner als Null, so wird die Überwachung 31 nicht aktiv. Ist der maximale Brennraumdruck Pmax jedoch größer als der Sollwert Pmax_des und ist damit die Druckdifferenz d_Pmax größer als Null, so wird die Überwachung 31 aktiv. Gegebenenfalls kann als Aktivierungskriterium anstelle des Werts "Null" auch ein anderer Wert vorgesehen sein. Weiterhin kann gegebenenfalls das Aktivierungskriterium auch mit einer Hysterese-Funktion kombiniert sein.

Ist die Überwachung 31 aktiviert, so wird dies einer Motorsteuerung 32 weitergegeben. Diese kann einerseits Maßnahmen ergreifen, um eine Beschädigung der Brennkraftmaschine 10 aufgrund eines zu hohen maximalen Brennraumdrucks zu vermeiden. Beispielsweise kann die Motorsteuerung 32 aufgrund der aktivierten Überwachung 31 einen Notlaufbetrieb der Brennkraftmaschine 10 in Gang setzen. Andererseits kann die Motorsteuerung 32 eine Anzeige für den Betreiber der Brennkraftmaschine 10, also insbesondere des Fahrers des Kraftfahrzeugs erzeugen. Damit ist der Fahrer über den zu hohen maximalen Brennraumdruck informiert und kann umgehend eine Überprüfung und gegebenenfalls Reparatur der Brennkraftmaschine 10 vornehmen lassen. Weiterhin ist es möglich, dass die Aktivierung der Überwachung 31 in der Motorsteuerung 32 abgespeichert wird, so dass bei einer späteren Inspektion oder Wartung der Brennkraftmaschine 10 der aufgetretene, zu hohe maximale Brennraumdruck berücksichtigt werden kann.

## Patentansprüche

1. Verfahren zum Betreiben einer Brennkraftmaschine insbesondere eines Kraftfahrzeugs, wobei die Brennkraftmaschine (10) einen Brennraum und ein Einspritzventil aufweist, mit dem Kraftstoff direkt oder über ein Saugrohr dem Brennraum zuführbar ist, und wobei bei dem Verfahren ein maximaler Brennraumdruck (Pmax) und ein Signal (AB_MI, AB_PI) für einen Einspritzbeginn von Kraftstoff ermittelt und das Signal (AB_MI, AB_PI) für den Einspritzbeginn in Abhängigkeit von dem maximalen Brennraumdruck (Pmax) beeinflusst wird, **dadurch gekennzeichnet, dass** ein Signal (AD_MI, AD_PI) für eine Einspritzdauer von Kraftstoff ermittelt und in Abhängigkeit von dem maximalen Brennraumdruck (Pmax) beeinflusst wird.

2. Verfahren nach Anspruch 1, **dadurch gekennzeichnet, dass** ein Sollwert (Pmax_des) vorgegeben wird, und dass das Signal (AB_MI, AB_PI) für den Einspritzbeginn derart beeinflusst wird, dass der Sollwert (Pmax_des) für den maximalen Brennraumdruck nicht überschritten wird.

3. Verfahren nach Anspruch 1 oder 2, **dadurch gekennzeichnet, dass** der maximale Brennraumdruck (Pmax) mit dem Sollwert (Pmax_des) für den maximalen Brennraumdruck verglichen wird, und dass das Signal (AD_MI, AD_PI) für die Einspritzdauer in Abhängigkeit von dem Vergleich beeinflusst wird.

4. Verfahren nach einem der Ansprüche 1 bis 3, **dadurch gekennzeichnet, dass** das Signal (AD_MI, AD_PI) für die Einspritzdauer derart beeinflusst wird, dass eine maximale Temperatur im Auslassbereich der Brennkraftmaschine (10) nicht überschritten wird.

5. Verfahren nach einem der Ansprüche 1 bis 4, wobei das Signal (AB_MI, AB_PI) für den Einspritzbeginn in Richtung zu einer Spätverschiebung des Einspritzbeginns beeinflusst wird, **dadurch gekennzeichnet, dass** das Signal (AD_MI, AD_PI) für die Einspritzdauer in Richtung zu einer Verkürzung der Einspritzdauer beeinflusst wird.

6. Verfahren nach einem der Ansprüche 1 bis 5, **dadurch gekennzeichnet, dass** die Beeinflussung des Signals (AD_MI, AD_PI) für die Einspritzdauer gesteuert (17) oder geregelt wird (19).

7. Verfahren nach einem der Ansprüche 1 bis 6, **dadurch gekennzeichnet, dass** das Signal (AB_MI) für den Einspritzbeginn und das Signal (AD_MI) für die Einspritzdauer sich auf eine Haupteinspritzung (Fig. 1a und 1b) beziehen.

8. Verfahren nach einem der Ansprüche 1 bis 7, **dadurch gekennzeichnet, dass** das Signal (AB_PI) für den Einspritzbeginn und das Signal (AD_PI) für die Einspritzdauer sich auf eine oder mehrere Voreinspritzung/en (Fig. 2) beziehen.

9. Verfahren nach Anspruch 8, **dadurch gekennzeichnet, dass** ein Signal (Anz_Pl) für eine Anzahl der Voreinspritzungen ermittelt und in Abhängigkeit von dem maximalen Brennraumdruck (Pmax) beeinflusst wird.

10. Verfahren nach einem der Ansprüche 1 bis 9, **dadurch gekennzeichnet, dass** ein Sollwert für ein von der Brennkraftmaschine (10) abzugebendes Motormoment und/oder ein Ladedruck und/oder eine Ladelufttemperatur eines gegebenenfalls vorhandenen Abgasturboladers und/oder ein auf den Kraftstoff einwirkender, sogenannter Raildruck und/oder eine Frischluftrate der der Brennkraftmaschine (10) zugeführten Luft und/oder eine Rückführrate einer gegebenenfalls vorhandenen Abgasrückführung beeinflusst wird.

11. Verfahren nach einem der Ansprüche 1 bis 10, **dadurch gekennzeichnet, dass** das Verfahren zylinderindividuell angewendet wird.

12. Verfahren zum Betreiben einer Brennkraftmaschine insbesondere nach einem der vorstehenden Ansprüche, wobei die Brennkraftmaschine (10) einen Brennraum und ein Einspritzventil aufweist, mit dem Kraftstoff direkt oder über ein Saugrohr dem Brennraum zuführbar ist, und wobei bei dem Verfahren ein maximaler Brennraumdruck (Pmax) ermittelt und mit einem Sollwert (Pmax_des) für den maximalen Brennraumdruck verglichen wird, **dadurch gekennzeichnet, dass** eine Überwachung (31) aktiviert wird, wenn der maximale Brennraumdruck (Pmax) größer als der Sollwert (Pmax_des) für den maximalen Brennraumdruck wird.

13. Verfahren nach Anspruch 12, **dadurch gekennzeichnet, dass** die Brennkraftmaschine (10) in einen Notlaufbetrieb geschaltet wird oder dass ein Betreiber der Brennkraftmaschine (10) informiert wird, wenn die Überwachung (31) aktiviert ist.

14. Computerprogramm, **dadurch gekennzeichnet, dass** es zur Anwendung in einem Verfahren nach einem der Ansprüche 1 bis 13 programmiert ist.

15. Speichermedium, **dadurch gekennzeichnet, dass** auf ihm ein Computerprogramm zur Anwendung in einem Verfahren nach einem der Ansprüche 1 bis 13 gespeichert ist.

16. Steuergerät für eine Brennkraftmaschine insbesondere eines Kraftfahrzeugs, **dadurch gekennzeichnet, dass** es zur Anwendung in einem Verfahren nach einem der Ansprüche 1 bis 13 hergerichtet ist.
